# EUROPEAN PATENT APPLICATION

(11) **EP 3 660 080 A1**
(43) Date of publication of application: **03.06.2020**
(21) Application number: 18209597.6
(22) Date of filing: 30.11.2018
(51) Int. Cl.: C08J 5/00, B82Y 30/00, C08K 9/04, C08K 3/04

(54) **POLYMER COMPOSITIONS INCLUDING FUNCTIONALIZED CARBON NANOTUBES AND CRYSTALLINE CELLULOSE MATERIAL**

(71) Applicant: SABIC Global Technologies B.V., 4612 PX Bergen op Zoom (NL)
(72) Inventor: HAGENAARS, Arno, 4612 PX Bergen op Zoom (NL); MERCX, Frans, 4612 PX Bergen op Zoom (NL); VAN DE GRAMPEL, Robert, 4612 PX Bergen op Zoom (NL); VASTENHOUT, Sidney, 4612 PX Bergen op Zoom (NL); HOEKS, Theo, 4612 PX Bergen op Zoom (NL); RAMAKRISHNAN, Vaidya, 4612 PX Bergen op Zoom (NL)
(74) Representative: J A Kemp LLP

(57) **Abstract**

This disclosure describes a polymer composition that includes a polymer, crystalline cellulose, and functionalized carbon nanotubes, and systems and method of formation thereof. The polymer composition includes functionalized carbon nanotubes, crystalline cellulose, and one or more polymers.

## Description

### FIELD OF INVENTION

The present disclosure relates generally to polymeric compositions, and, but not by way of limitation, to compositions, such as electrically conductive polymeric compositions, and methods and systems for producing the compositions, in which the compositions include carbon nanotubes.

### BACKGROUND

Carbon Nanotubes (CNT's) have excellent thermal and electrical conductivity, electromagnetic shielding, piezoresistivity, and mechanical properties, such as fracture toughness. But due to the poor dispersibility of CNTs into a polymeric matrix, the CNTs tend to agglomerate and deteriorate the properties of the polymeric matrix. For example, when CNTs agglomerate in a polymeric matrix, mechanical properties, such as fracture toughness and loading, of the host polymer are reduced. Therefore, there is a need for CNTs that disperse better into polymer matrices and that increase mechanical properties thereof, and methods for dispersing CNTs into polymer matrices.

### SUMMARY

The present disclosure describes compositions of functionalized carbon nanotubes, crystalline cellulose material, and polymers, and methods, devices, and systems to form a dispersion of functionalized carbon nanotubes and crystalline cellulose and to form parts therefrom. For example, polymer compositions described herein include functionalized carbon nanotubes, crystalline cellulose (e.g., microcrystalline cellulose (MCC)), and one or more polymers. The functionalized carbon nanotubes have multiple walls (e.g., 5-15 walls) and one or more oxygen based functional groups, such a hydroxyl group, a carboxylic acid group, or a combination thereof. In some implementations, the functionalized carbon nanotubes have an oxidation level between 3 and 25 wt% as determined by thermogravimetric analysis (TGA).

The functionalized carbon nanotubes have increased bonding and adhesion to polymers as compared to conventional carbon nanotubes. For example, functional groups (e.g., oxygen based functional groups) of the functionalized carbon nanotubes contribute to increased adhesion between the functionalized carbon nanotubes and a polymer host of the polymer composition. Additionally, the polymer composition may have increased dispersion of the functionalized carbon nanotubes in the polymer composition. The increased bonding/adhesion and dispersion of the functionalized carbon nanotubes to the polymers increases mechanical properties and optionally rheological properties (e.g., melt strength) of the part formed therefrom. Examples of a mechanical properties that can be improved are fracture toughness and loading. The increases mechanical properties enable products formed by the parts to have lower weights, lower volumes, and/or increased mechanical properties. Additionally, the increased bonding/adhesion and dispersion of the functionalized carbon nanotubes to the polymers may increase an amount of functionalized carbon nanotubes that can be included in the polymer composition, such as an amount of functionalized carbon nanotubes that can be included in the polymer composition before degradation of properties of the host polymer. Accordingly, one or more parts formed by polymer compositions with increased functionalized carbon nanotubes may have electrically conductive properties, such as being electrically conductive, being antistatic, or providing electromagnetic shielding.

"Carbon nanotubes", as used herein, refers to allotropes of carbon with a cylindrical nanostructure. The carbon nanotubes often are formed of one-atom-thick sheets (e.g., graphitic sheets) of carbon atoms, i.e. graphene. The sheets are rolled at specific and discrete ("chiral") angles, and the combination of the rolling angle and radius affects nanotube properties. Although a majority of the carbon atoms of the sheets are exposed, the sheets (i.e., the carbon atoms thereof) are relatively inert and typically do not adhere well to a host material (e.g., a polymer matrix). "Functionalized carbon nanotubes", as used herein, refers to carbon nanotubes whose surfaces are uniformly or non-uniformly modified so as to have a functional chemical moiety associated therewith. These surfaces are functionalized by reaction with oxidizing or other chemical media through chemical reactions or physical adsorption. Functionalized carbon nanotubes can then be further modified by additional reactions to form other functional moieties on the surfaces of the carbon nanotubes. By changing the chemical moieties on the surfaces of the carbon nanotube, the functionalized carbon nanotubes can be physically or chemically bonded to a wide variety of substrates, including polymers. The carbon nanotubes (e.g., double-walled or multi-walled) used to produce the functionalized carbon nanotubes may be grown or formed by conventional processes, such as chemical vapor deposition (CVD) and/or another process.

A dispersion of functionalized carbon nanotubes and crystalline cellulose (e.g., crystalline cellulose, microcrystalline cellulose, nano-crystalline cellulose, or a combination thereof), which can be well dispersed in a polymer matrix through polar or covalent interaction, has better adhesion to the host polymer matrix and improved mechanical properties, as compared to conventional carbon nanotubes. Improved interaction/adhesion (as compared to conventional carbon nanotubes) between the functional carbon nanotubes and the polymer matrix increases mechanical properties, such as fracture toughness and loading. In addition, the use of certain compatibilizers in combination with functionalized carbon nanotubes allows improving the compatibilization/adhesion to the host polymer matrix (e.g., polymer resin) and further increases fracture toughness and loading.

As an illustrative example of functionalization of carbon nanotubes, multi-walled carbon nanotubes are oxidized through either wet chemical methods or plasma treatments and are modified by oxidation to become shortened and oxidized. The oxidation process causes functional groups (e.g., oxygen based functional groups or oxygen functionalities) to form on sidewalls of the oxidized multi-walled carbon nanotubes. The functional groups are able to form covalent or polar bonds with polymer molecules (e.g., polymer chains) of the polymer to better adhere the functionalized carbon nanotubes to the polymer molecules than bonding unoxidized or unmodified carbon atoms of the functionalized carbon nanotubes or conventional carbon nanotubes to the polymer molecules.

In a particular implementation, oxygen functional groups of functionalized carbon nanotubes have increased polar interactions (e.g., coulomb, hydrogen bonding) and/or increased chemical bonding with a host material (e.g., a polymer matrix). The increased interaction and bonding strength thereof results in increased mechanical properties, such as fracture toughness and loading. Additionally, the functionalized carbon nanotubes may have increased dispersion (e.g., produce less "clumping" or agglomerates) in polymers as compared to carbon nanotubes, which may further increase bonding and fracture toughness and loading.

The functionalized carbon nanotubes described herein typically have one or more of the following characteristics: a length between 0.4 and 15 microns, an overall oxidation on sidewalls between 5 and 25 wt% oxygen based functional groups, 2-15 sidewalls, an oxidation level of the functionalized carbon nanotubes is between 3 and 25 wt%, an amount of carboxylic acid groups as determined by titration typically ranges from 0.02 to 0.18 millimoles/g of the functionalized carbon nanotubes, an amount of hydroxyl groups typically ranges from 0.04 to 0.34 millimoles/g of the functionalized carbon nanotubes. The functionalized carbon nanotubes described herein may be further chemically modified to allowing tuning of the functional groups to increase interaction and/or bonding with the intended host matrix polymer.

The functionalized carbon nanotubes may be combined with (e.g., blended with) polymers, such as in a melt-compounding operation, to produce polymer compositions and/or products made therefrom with a desired conductivity level. The polymer compositions (including the functionalized carbon nanotubes) may advantageously increase resistance to fracture and increase loading, in materials and products formed therefrom. Examples of products that can benefit from such improvements are hard drive components, integrated circuits, and enclosures. Accordingly, the present disclosure overcomes the existing challenges of increasing mechanical properties of polymer compositions.

Some embodiments of the present polymeric composite materials comprise: one or more polymers; crystalline cellulose; and functionalized carbon nanotubes. In some implementations of the embodiments of the present polymeric composite materials, the polymeric composite material further comprises a surfactant. In some such implementations, the surfactant includes C8-C20 type surfactants. In some of the foregoing embodiments of the polymeric composite materials, the crystalline cellulose corresponds to a dispersion agent of the functionalized carbon nanotubes, where the crystalline cellulose includes crystalline cellulose, microcrystalline cellulose, nano-crystalline cellulose, or a combination thereof, and where the crystalline cellulose and the functionalized carbon nanotubes correspond to filler material of the one or more polymers. In some of the foregoing embodiments of the polymeric composite materials,, the crystalline cellulose is covalently bonded or coordinated to functional groups of the functionalized carbon nanotubes. Additionally, or alternatively, the crystalline cellulose is bonded to or coordinated with polymer molecules of the one or more polymers.

In some of the foregoing embodiments of the polymeric composite materials, the polymeric composite materials further comprise carbon black, carbon fibers, graphene, non-functionalized multi-wall carbon nanotubes, single-walled functionalized or non-functionalized carbon nanotubes, or a combination thereof. In some of the foregoing embodiments of the polymeric composite materials, the functionalized carbon nanotubes have one or more characteristics selected from the group of: a length of between 0.4 and 15 microns, 2 to 15 walls, an oxidation level between 3 and 25 wt% as determined by thermogravimetric analysis (TGA), or any combination thereof. Additionally, or alternatively, the polymer is selected from the group consisting of Lexan-HFD, low molecular weight polycarbonate (PC), polylactide (PLA), acrylonitrile butadiene styrene (ABS), polybutylene terephthalate (PBT), polyethylene terephthalate (PET), polyethylene naphthalate (PEN), phenyl-N-tert-butylnitrone (PBN), polyamides, polyolefins, polycarbonate copolymers, polyphenylene ether (PPE), polyetherimide (PEI), polystyrene (PS), polymethylmethacrylate (PMMA), thermoset polymers, and a combination thereof.

Some embodiments of the present methods comprise: receiving a polymer composition including one or more polymers, functionalized carbon nanotubes, and crystalline cellulose; and forming the polymeric composite material based on the polymer composition, where the crystalline cellulose is absorbed on a surface of the functionalized carbon nanotubes. In some implementations of the embodiments of the present methods, the methods further comprise adding the functionalized carbon nanotubes to the crystalline cellulose to create a CC-CNT dispersion; and blending the CC-CNT dispersion with the polymer to form the polymer composition. In some implementations, the methods further comprise adding a surfactant to the crystalline cellulose, where the surfactant inhibits agglomeration of the functionalized carbon nanotubes and the crystalline cellulose. In some implementations of the embodiments of the present methods, the functionalized carbon nanotubes and the surfactant are combined to form a mixture, and the methods further comprise adding the mixture to the crystalline cellulose by an ultrasonification process.

In some implementations of the embodiments of the present methods, the methods further comprise receiving, at an extrusion device form a liquid feeder, a CC-CNT dispersion; combining, at the extrusion device, the polymer and the CC-CNT dispersion; and outputting, from the extrusion device to a die, the polymer composition including the functionalized carbon nanotubes and the crystalline cellulose. In some implementations of the embodiments of the present methods, the functionalized carbon nanotubes have an oxidation level between 3 and 25 wt% as determined by thermogravimetric analysis (TGA), where performing the TGA includes heating dried functionalized carbon nanotubes at a rate of 5 degrees C per minute from room temperature to 1000 degrees C in a dry nitrogen atmosphere, and where the oxidation level of the functionalized carbon nanotubes is based on a percentage weight loss from 200 to 600 degrees C. In some implementations, a molded part formed by some of the foregoing embodiments of the present methods is a conductive polymer, an antistatic polymer, or an electrically static dissipative polymer.

As used herein, various terminology is for the purpose of describing particular implementations only and is not intended to be limiting of implementations. For example, as used herein, an ordinal term (e.g., "first," "second," "third," etc.) used to modify an element, such as a structure, a component, an operation, etc., does not by itself indicate any priority or order of the element with respect to another element, but rather merely distinguishes the element from another element having a same name (but for use of the ordinal term). The term "coupled" is defined as connected, although not necessarily directly, and not necessarily mechanically; two items that are "coupled" may be unitary with each other. The terms "a" and "an" are defined as one or more unless this disclosure explicitly requires otherwise. The term "substantially" is defined as largely but not necessarily wholly what is specified (and includes what is specified; e.g., substantially 90 degrees includes 90 degrees and substantially parallel includes parallel), as understood by a person of ordinary skill in the art. In any disclosed implementation, the term "substantially" may be substituted with "within [a percentage] of' what is specified, where the percentage includes .1, 1, or 5 percent; and the term "approximately" may be substituted with "within 10 percent of' what is specified. The phrase "and/or" means and or. To illustrate, A, B, and/or C includes: A alone, B alone, C alone, a combination of A and B, a combination of A and C, a combination of B and C, or a combination of A, B, and C. In other words, "and/or" operates as an inclusive or.

The terms "comprise" (and any form of comprise, such as "comprises" and "comprising"), "have" (and any form of have, such as "has" and "having"), and "include" (and any form of include, such as "includes" and "including"). As a result, an apparatus that "comprises," "has," or "includes" one or more elements possesses those one or more elements, but is not limited to possessing only those one or more elements. Likewise, a method that "comprises," "has," or "includes" one or more steps possesses those one or more steps, but is not limited to possessing only those one or more steps.

Any implementation of any of the systems, methods, and article of manufacture can consist of or consist essentially of - rather than comprise/have/include - any of the described steps, elements, and/or features. Thus, in any of the claims, the term "consisting of' or "consisting essentially of' can be substituted for any of the open-ended linking verbs recited above, in order to change the scope of a given claim from what it would otherwise be using the open-ended linking verb. Additionally, the term "wherein" may be used interchangeably with "where."

Further, a device or system that is configured in a certain way is configured in at least that way, but it can also be configured in other ways than those specifically described. The feature or features of one implementation may be applied to other implementations, even though not described or illustrated, unless expressly prohibited by this disclosure or the nature of the implementations. Some details associated with the implementations are described above, and others are described below. Other implementations, advantages, and features of the present disclosure will become apparent after review of the entire application, including the following sections: Brief Description of the Drawings, Detailed Description, and the Claims.

### BRIEF DESCRIPTION OF THE DRAWINGS

The following drawings illustrate by way of example and not limitation. For the sake of brevity and clarity, every feature of a given structure is not always labeled in every figure in which that structure appears. Identical reference numbers do not necessarily indicate an identical structure. Rather, the same reference number may be used to indicate a similar feature or a feature with similar functionality, as may non-identical reference numbers. The figures are drawn to scale (unless otherwise noted), meaning the sizes of the depicted elements are accurate relative to each other for at least the implementation depicted in the figures. Views identified as schematics are not drawn to scale.
**FIG. 1** is a diagram that illustrates an example of a system for creating polymer material using a polymer composition including functionalized carbon nanotubes and crystalline cellulose.
**FIG. 2** is a diagram that illustrates a perspective view of an example of the polymer composition of FIG. 1.
**FIG. 3** is a perspective view of an example of a system for producing polymer material.
**FIG. 4** is a graph illustrating dispersion states of a functionalized carbon nanotubes and microcrystalline cellulose dispersion.
**FIG. 5** is a graph illustrating a Young's Modulus of exemplary polymer compositions.
**FIG. 6** is a graph illustrating fracture toughness of exemplary polymer compositions.
**FIG. 7** is a graph illustrating shear viscosity of exemplary polymer compositions.
**FIG. 8** is a graph illustrating extensional viscosity of exemplary polymer compositions.
**FIG. 9** is a flowchart illustrating an example of a method of manufacturing functionalized carbon nanotubes.
**FIG. 10** is a flowchart illustrating an example of a method of manufacturing a polymer composition including functionalized carbon nanotubes and crystalline cellulose.
**FIG. 11** is a flowchart illustrating an example of a method of manufacturing polymer material using a polymer composition including functionalized carbon nanotubes and crystalline cellulose.

### DETAILED DESCRIPTION OF ILLUSTRATIVE IMPLEMENTATIONS

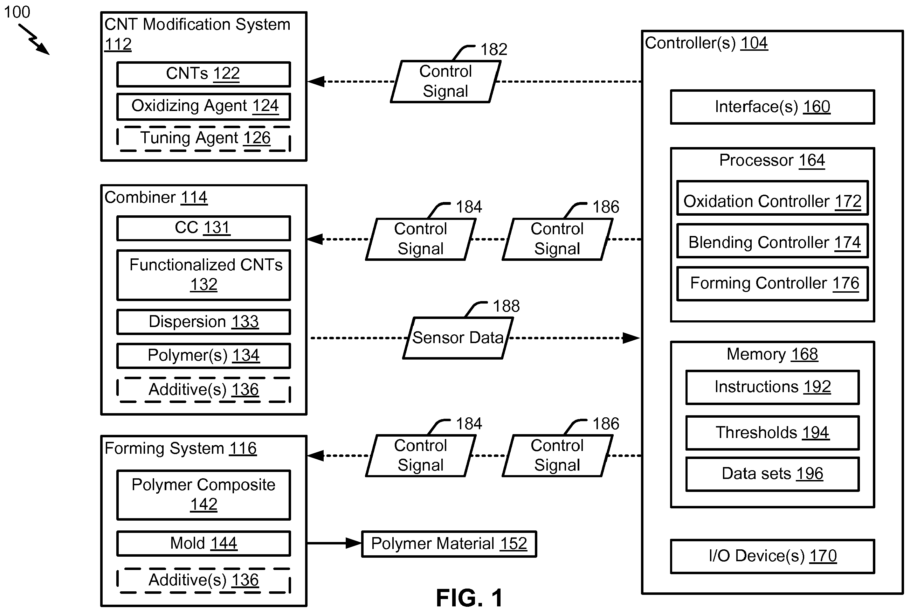

Referring to FIG. 1, a block diagram of a system 100 for manufacturing a polymer material 152, such as a molded part, is shown. polymer material 152 includes a polymer composite 142 having crystalline cellulose 131 (e.g., crystalline cellulose, microcrystalline cellulose, nano-crystalline cellulose, or a combination thereof) and functionalized carbon nanotubes 132. Polymer material 152 may have increased mechanical properties, as compared to polymer materials that incorporate conventional carbon nanotubes, such as non-functionalized carbon nanotubes, and/or that a lack carbon nanotube dispersing agent.

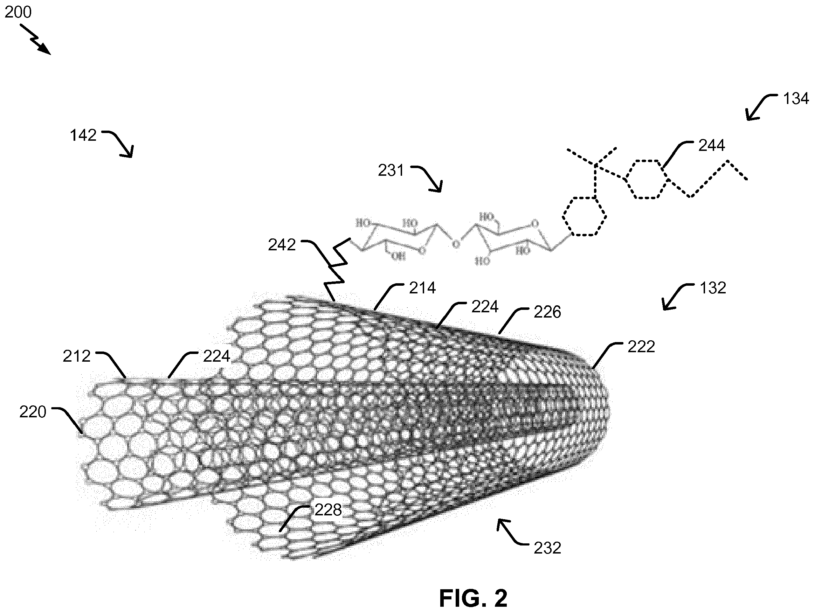

System 100 includes a CNT modification system 112, a combiner 114, a forming system 116, and an electronic device 118. CNT modification system 112 is configured to generate functionalized carbon nanotubes 132 from carbon nanotubes 122 and an oxidizing agent 124. CNT modification system 112 may include or correspond to a wet etch or plasma treatment oxidation system which is configured to oxidize the carbon nanotubes 122 to form functional groups thereon, thereby creating functionalized carbon nanotubes 132. In some implementations, the carbon nanotubes 122 are formed by chemical vapor deposition (CVD). Functionalized carbon nanotubes 132 are described further with reference to FIG. 2.

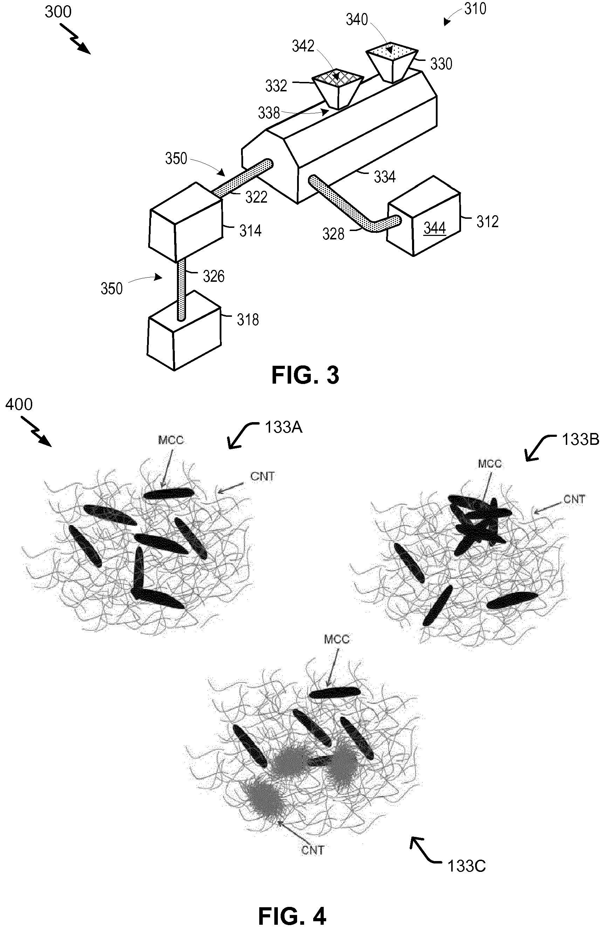

Combiner 114 is configured to create a dispersion 133 of functionalized carbon nanotubes 132 and crystalline cellulose 131 and to create polymer composite 142 (e.g., a blended composition) from dispersion 133 and one or more polymers 134. For example, combiner 114 generates pellets of polymer composite 142. Combiner 114 may include or correspond to a melt-compounding system or a melt-blend combiner. Polymer composite 142 and polymer 134 are described further with reference to FIG. 2, and dispersion 133 is further described with reference to FIG. 4. Forming system 116 is configured to generate a polymer material 152, such as a molded part, using the polymer composite 142. Forming system 116 may include or correspond to an injection molding system, an extrusion system, or a combination thereof. Although listed as separate systems, combiner 114 and forming system 116 may be incorporated into a single system, such as described with reference to FIG. 3.

Electronic device 118 includes one or more interfaces 160, one or more processors (e.g., one or more controllers), such as a representative processor 164, a memory 168, and one or more input/output (I/O) devices 170. Interfaces 160 may include a network interface and/or a device interface configured to be communicatively coupled to one or more other devices, such as CNT modification system 112, combiner 114, or forming system 116. For example, interfaces 160 may include a transmitter, a receiver, or a combination thereof (e.g., a transceiver), and may enable wired communication, wireless communication, or a combination thereof. Although electronic device 118 is described as a single electronic device, in other implementations system 100 includes multiple electronic devices. In such implementations, such as a distributed control system, the multiple electronic devices each control a sub-system of system 100, such as CNT modification system 112, combiner 114, or forming system 116.

Processor 164 includes oxidation controller 172, blending controller 174, and forming controller 176. For example, oxidation controller 172 (e.g., processor 164) may be configured to generate and/or communicate one or more oxidation control signals 182 to CNT modification system 112. Blending controller 174 is configured to control (or regulate) an environment, such as an air quality, temperature, and/or pressure, within combiner 114 (e.g., a chamber or extruder thereof) and/or delivery/injection of materials into combiner 114. For example, blending controller 174 may be configured to generate and/or communicate one or more environment control signals 184 to combiner 114, one or more ingredient delivery control signals 186 to combiner 114, or a combination thereof.

Forming controller 176 is configured to control (or regulate) an environment, such as a temperature (e.g., heat) and/or pressure, within forming system 116 (e.g., mold 144 thereof) and/or delivery/injection of materials into forming system 116 (e.g., mold 144 thereof). For example, forming controller 176 may be configured to generate and/or communicate one or more environment control signals 184 to forming system 116, one or more ingredient delivery control signals 186 to forming system 116, or a combination thereof.

Although one or more components of processor 164 are described as being separate components, at in some implementations, one or more components of the processor 164 may be combined into a single component. For example, although oxidation controller 172 and blending controller 174 are described as being separate, in other implementations, oxidation controller 172 and blending controller 174 may be incorporated into a single controller. Additionally, or alternatively, one or more components of processor 164 may be separate from (e.g., not included in) processor 164. To illustrate, oxidation controller 172 may be separate and distinct from processor 164.

Memory 168, such as a non-transitory computer-readable storage medium, may include volatile memory devices (e.g., random access memory (RAM) devices), nonvolatile memory devices (e.g., read-only memory (ROM) devices, programmable read-only memory, and flash memory), or both. Memory 168 may be configured to store instructions 192, one or more thresholds 194, and one or more data sets 196. Instructions 192 (e.g., control logic) may be configured to, when executed by the one or more processors 164, cause the processor(s) 164 to perform operations as described further here. For example, the one or more processors 164 may perform operations as described with reference to FIGS. 3 and 9-11. The one or more thresholds 194 and one or more data sets 196 may be configured to cause the processor(s) 164 to generate control signals. For example, the processors 164 may generate and send control signals responsive to receiving sensor data, such as sensor data 188 from combiner 114. The temperature or ingredient flow rate can be adjusted based on comparing sensor data to one or more thresholds 194, one or more data sets 196, or a combination thereof.

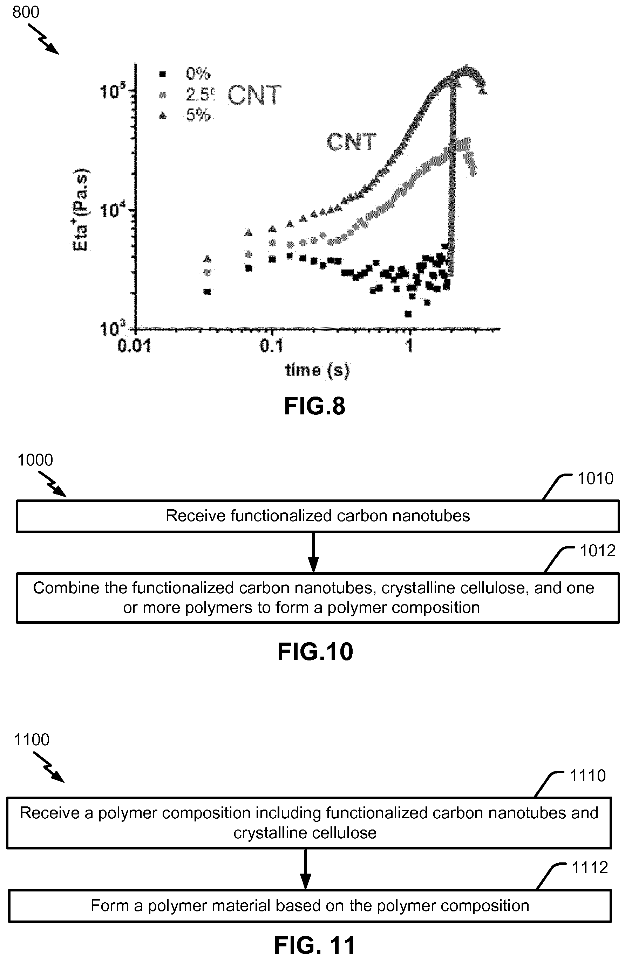

In some implementations, processor 164 may include or correspond to a microcontroller/microprocessor, a central processing unit (CPU), a field-programmable gate array (FPGA) device, an application-specific integrated circuits (ASIC), another hardware device, a firmware device, or any combination thereof. Processor 164 may be configured to execute instructions 192 to initiate or perform one or more operations described with reference to FIG. 3 and/or one more operations of the methods of FIGS. 9-11.

The one or more I/O devices 170 may include a mouse, a keyboard, a display device, the camera, other I/O devices, or a combination thereof. In some implementations, the processor(s) 164 generate and send control signals responsive to receiving one or more user inputs via the one or more I/O devices 170.

Electronic device 118 may include or correspond a communications device, a mobile phone, a cellular phone, a satellite phone, a computer, a tablet, a portable computer, a display device, a media player, or a desktop computer. Additionally, or alternatively, the electronic device 118 may include a set top box, an entertainment unit, a personal digital assistant (PDA), a monitor, a computer monitor, a television, a tuner, a video player, any other device that includes a processor or that stores or retrieves data or computer instructions, or a combination thereof.

During operation of system 100, functionalized carbon nanotubes 132 are formed from carbon nanotubes 122 (e.g., received or grown double-wall or multi-wall carbon nanotubes). For example, CNT modification system 112 modifies (i.e., functionalizes) carbon nanotubes 122 by applying oxidizing agent 124 via wet etching or plasma treatment to oxidize carbon nanotubes 122 to form functionalized carbon nanotubes 132. To illustrate, oxidation controller 172 may send one or more oxidation control signals 182 to CNT modification system 112. The oxidation control signals 182 may include signals configured to cause CNT modification system 112 to apply liquid chemical etches using oxidizing agent 124 or plasma treatments using oxidizing agent 124 to the carbon nanotubes 122 to oxidize the carbon nanotubes 122, such as sidewall carbon atoms thereof. Additionally, CNT modification system 112 can perform ozonization (i.e., apply O3) to oxidize carbon nanotubes 122. Oxidizing the carbon nanotubes 122 forms functionalized carbon nanotubes 132 by oxidizing carbon atoms and/or attaching/forming a functional oxygen group bonded to the carbon atoms, specifically sidewall carbon atoms, as described further with reference to FIG. 2. Additionally, functional groups may be bonded to carbon atoms of nanotube ends.

In a particular implementation, oxidizing agent 124 includes nitric acid or a nitric acid and sulfuric acid mixture. The nitric acid and sulfuric acid mixture may be an aqueous mixture. Additionally, the oxidizing agent 124 may further treat carbon nanotubes 122 to prepare the carbon nanotubes 122 for bonding to the polymer 134. For example the nitric acid or the nitric acid and sulfuric acid mixture removes metal residues from (e.g., left behind by) catalysts used to form the carbon nanotubes, specifically catalysts used during a CVD process to grow/form carbon nanotubes 122.

Additionally, the oxidation control signals 182 may include signals configured to cause CNT modification system 112 to rinse the oxidized carbon nanotubes 122 (e.g., the functionalized carbon nanotubes 132) to remove contaminants. In some implementations, the oxidized carbon nanotubes 122 are further treated with tuning agent 126 by CNT modification system 112. To illustrate, CNT modification system 112 applies tuning agent 126 to further modify the oxidized carbon nanotubes 122 by modifying functional groups attached to the oxidized carbon nanotubes 122. To illustrate, tuning agent 126 reacts with one or more of the functional groups of the oxidized carbon nanotubes 122 to chemically modify the functional groups for increased adhesion to polymer 134 and to generate functionalized carbon nanotubes 132. In other implementations, carbon nanotubes 122 are processed to form functionalized carbon nanotubes 132 by amidixation (e.g., imidization) and/or epoxidation, as opposed to oxidation.

After generation of functionalized carbon nanotubes 132 (and optionally tuning/ further modification thereof), the functionalized carbon nanotubes 132 are provided to combiner 114. Combiner 114 generate dispersion 133 based on combining crystalline cellulose 131 and functionalized carbon nanotubes 132. For example, combiner 114 performs an ultrasonification process to add functionalized carbon nanotubes 132 to crystalline cellulose 131. In a particular implementation, the crystalline cellulose 131 is an aqueous solution. Furthermore, dispersion 133 may include additive 136, such as a surfactant in some implementations. Exemplary surfactants include C8-C20 type surfactants, such as Pluronic F-127 or CTAB, Triton X100, alkylphenol polyoxyethylene ether (APEO), and poly vinyl pyrrolidone (PVP) type surfactants. In some implementations, the surfactant is combined (e.g., mixed) with or added to functionalized carbon nanotubes 132 (to form a mixture) prior to combination with crystalline cellulose 131. In other implementations, the surfactant is added to crystalline cellulose 131 or is added to dispersion 133 after combining functionalized carbon nanotubes 132 and crystalline cellulose 131.

In some implementations, dispersion 133 has a concentration of functionalized carbon nanotubes 132 between 0.1 wt% and 5 wt%. Additional or alternatively, dispersion 133 has a concentration of crystalline cellulose 131 between 0.1 wt% and 10 wt%.

A polymer composite 142 (e.g., a polymer composition) is generated by the combiner 114. For example, the combiner 114 combines (e.g., mixes or blends), responsive to control signals 184, 186 from the blending controller 174, functionalized carbon nanotubes 132 and polymer 134 (and optionally additive(s) 136). To illustrate, blending controller 174 may send one or more environment control signals 184 to combiner 114 to adjust conditions (e.g., heat, pressure, air quality) of the combiner 114 or conditions of the polymer composite 142 (viscosity, temperature, etc.). Additionally or alternatively, blending controller 174 may send one or more ingredient delivery control signals 186 to combiner 114 to adjust rates and or amounts of functionalized carbon nanotubes 132, polymer 134, one or more additives 136, or a combination thereof. Exemplary additives for increasing conductivity include carbon black, carbon fibers, graphene, non-functionalized multi-walled carbon nanotubes, single-walled functionalized or non-functionalized carbon nanotubes, or a combination thereof.

After formation of polymer composite 142, the polymer composite 142 is provided to forming system 116 and forming system 116 forms or generates polymer material 152. For example, forming system 116 may form polymer material 152 via injection molding. To illustrate, forming controller 176 may send or more control signals to control delivery (e.g., injection) of polymer composite 142 to mold 144 of forming system 116. Mold 144 may include or correspond to a tool or die. In some implementations, mold 144 is a negative mole and includes or defines one or more cavities that correspond to a shape of polymer material 152.

Additionally or alternatively, forming controller 176 may send or more control signals to control curing of polymer composite 142, such as control application of temperature and pressure to mold, such as when polymer composite 142 is provided to forming system 116 in pellets and/or not provided in a molten state. Forming controller 176 may further send one or more control signals to control cooling of polymer composite 142 and release of polymer material 152 from mold 144. For example, mold 144 may have multiple parts and the multiple parts may be decoupled from each other responsive to control signals to reveal and enable release of polymer material 152.

In some implementations polymer material 152 has a particular conductivity and/or shielding property. For example, polymer material 152 may be electrically static dissipative (ESD), anti-static or EMI resistant. To illustrate, polymer material 152 has a surface resistivity of E+05 to E+11 Ohm/square to provide protection against ESD or has a surface resistivity smaller than E+05 Ohm/square to shield against EMI (i.e., be EMI resistant).

Thus, system 100 of FIG. 1 produces functionalized carbon nanotube with improved bonding and adhesion properties for polymers to enable formation of polymer materials with a desired conductivity and increased mechanical properties. Accordingly, the present disclosure overcomes the existing challenges of dispersing carbon nanotubes in a polymer matrix and increasing, rather than deteriorating, properties of the polymer matrix.

Referring to FIG. 2, a perspective view 200 of an example of polymer composite 142 of FIG. 1 is shown. Polymer composite 142 is a polymer composition (e.g., a blended composition) and includes one or more polymers 134, functionalized carbon nanotubes 132, and microcrystalline cellulose 231. Microcrystalline cellulose 231 may include or correspond to crystalline cellulose 131. Polymer composite 142 is formed from combining a dispersion 133 of functionalized carbon nanotubes 132 and microcrystalline cellulose 231 with polymer 134. FIG. 2 represents a simplification of polymer composite 142 illustrating a single, multi-walled carbon nanotube 232 having a single functional group 242 attached thereto. The functional group 242 is attached to a single polymer chain 244 of polymer 134 via microcrystalline cellulose 231. Although, polymer composite 142 is illustrated as including a multi-walled carbon nanotube 232 (i.e., a double-walled carbon nanotube), in other implementations polymer composite 142 includes single-walled carbon nanotubes, double-walled carbon nanotubes, multi-walled carbon nanotubes, or a combination thereof. The multi-walled carbon nanotubes may have a concentric tube form, as illustrated in FIG. 2, or may have a rolled form. Additionally, or alternatively, although microcrystalline cellulose 231 is illustrated in FIG. 2, polymer composite 142 and/or dispersion 133 may include crystalline cellulose 131, such as crystalline cellulose, microcrystalline cellulose, nano-crystalline cellulose, or a combination thereof, in other implementations.

As illustrated in FIG. 2, multi-walled carbon nanotube 232 has two walls or tubes, a first tube 212 and a second tube 214. Each tube 212, 214 has a first end 220 (e.g., proximal end) and a second end 222 (e.g., distal end). Each tube 212, 214 has sidewalls 224 extending from the first end 220 to the second end 222. Sidewalls 224 have interior surfaces 226 and exterior surfaces 228.

In FIG. 2, multi-walled carbon nanotube 232 is illustrated with two walls for clarity. In other implementations, multi-walled carbon nanotube 232 has more than two walls. For example, in some implementations, the multi-walled carbon nanotube 232 includes 5 to 15 walls. To illustrate, a sheet of graphene may be rolled 5 times to produce a multi-walled carbon nanotube having 5 walls, i.e., 5 layers of carbon atoms spaced from one another. As another example, 5 sets of carbon nanotubes (e.g., single-wall nanotubes) are concentrically arranged (e.g., nested) to form a multi-walled carbon nanotube having 5 walls, similar to multi-walled carbon nanotube 232. In other implementations, multi-walled carbon nanotube 232 includes a number of walls that is equal to: 3, 4, 5, 6, 7, 8, 9, 10, 11, 12, 13, 14, 15, 16, 17, 18, 19, 20 walls, or more. The functionalized carbon nanotubes 132 may include or correspond to straight nanotubes, kinked nanotubes, nanotubes that contain Stone-Wales defects, or a combination thereof.

The functionalized carbon nanotubes 132 have a purity of greater than 90 percent in some implementations, i.e., a carbon content of greater than 90 percent. In other implementations, the functionalized carbon nanotubes 132 have a purity of greater than or equal to any of substantially: 80, 85, 90, or 95 percent. In a particular implementation, the functionalized carbon nanotubes 132 do not include amorphous carbon. Additionally, or alternatively, the functionalized carbon nanotubes 132 have residue metal impurities and/or metal oxide impurities of less than 10 percent. Exemplary impurities include metals Fe, Mg, Co, Al, Mo, and Mn, and/or oxides thereof. In other implementations, the functionalized carbon nanotubes 132 have residue metal impurities and/or metal oxide impurities of less than or equal to any of substantially: 20, 15, 10, or 5 percent.

In some implementations, a length of functionalized carbon nanotube 132 is less than or equal to 1.5 microns. In a particular implementation, a length of functionalized carbon nanotube 132 is less than or equal to 1.2 microns. In other implementations, a length of functionalized carbon nanotube 132 is between any two of substantially: 0.4, 0.6, 0.8, 1, 1.2, 1.4, 1.5, 1.6, 1.8, 2, 3, 4, 5, 6, 8, 10, 12, 14, or 15 microns. A length of functionalized carbon nanotubes 132 may indicate an average or mean length of all functionalized carbon nanotubes 132 or a threshold length that each functionalized carbon nanotubes 132 satisfies. Oxidizing the carbon nanotubes 122 may reduce a length of the carbon nanotubes 122, i.e., the functionalized carbon nanotubes 132 are shorter in length than the carbon nanotubes 122.

In some implementations, a width of functionalized carbon nanotubes 132 is less than or equal to 20 nm. In a particular implementation, a width of functionalized carbon nanotubes 132 is less than or equal to 13 nm. In some implementations, a length to diameter (i.e., 1/D) ratio is between 20 and 100. In a particular implementation, an 1/D ratio of functionalized carbon nanotube 132 is between 40 and 80.

In some implementations, the functionalized carbon nanotubes 132 have an aspect ratio from substantially 25 to substantially 500. In a particular implementation, the functionalized carbon nanotubes 132 have an aspect ratio from substantially 60 to substantially 200. Additionally or alternatively, in some implementations the functionalized carbon nanotubes 132 have a surface area (i.e., specific surface area (SSA) of area per unit mass) of between 200 to 300 meters squared per gram (m²/g). In other implementations, the functionalized carbon nanotubes 132 have a surface area of greater than 600 m²/g.

As illustrated in FIG. 2, multi-walled carbon nanotube 232 has a functional group 242 coupled to exterior surface 226 of the second tube 214, for clarity. In reality, multi-walled carbon nanotube 232 has a plurality of a functional groups 242 attached to sidewalls 224 thereof, thereby forming or being a functionalized carbon nanotube 132. The functional group 242 is coupled to polymer 134 (e.g., a particular polymer chain 244 or a polymer molecule). One or more functional groups 242 of functionalized carbon nanotube 132 may form covalent or polar bonds with polymer 134 and have increased bonding/affinity to polymer 134 than carbon atoms (e.g., unoxidized carbon atoms) of functionalized carbon nanotube 132. Additionally, polymer chains 244 of polymer 134 can be bonded directly to carbon atoms (e.g., oxidized carbon atoms) of functionalized carbon nanotube 132 and other polymer chains 244.

In some implementations, the functional groups 242 include or correspond to oxygen based or oxygen containing functional groups (e.g., oxygen functionalities), such as compounds that contain C-O bonds. Examples of oxygen based or oxygen containing functional groups include: alcohols (e.g., hydroxyls), ketones (e.g., carbonyls), aldehydes, acyl halides, carbonates, carboxylates, carboxylic acids, esters, methoxys, hydroperoxides, peroxides, ethers, hemiacetals, hemiketals, acetals, ortoesters, hereocycles, and orthocarbonate esters. In a particular implementation, functional groups 242 of functionalized carbon nanotube 132 includes or corresponds to hydroxyl groups, carboxylic acid groups, or a combination thereof.

In some implementations, an oxidation level of the functionalized carbon nanotubes 132 is between 3 and 25 wt%. The oxidation level as used herein is defined as an amount by weight (weight percent) of oxygenated functional groups covalently bound to functionalized carbon nanotubes 132. A thermogravimetric method can be used to determine the weight percent of oxygenated functional groups on (e.g., covalently bound to) the functionalized carbon nanotubes 132. For example, a particular thermogravimetric analysis (TGA) method involves heating substantially 5 mg of dried functionalized carbon nanotubes 132 at a rate of 5 degrees C per minute from room temperature to 1000 degrees C in a dry nitrogen atmosphere. The percentage weight loss from 200 to 600 degrees C is taken as the percent weight loss of oxygenated functional groups. In other implementations, the oxygen level of the functionalized carbon nanotubes 132, as determined by the above TGA method, is between any two of substantially: 1, 2, 3, 4, 5, 10, 15, 20, 25, and 30 wt%.

In some such implementations, an amount of carboxylic acid groups coupled to functionalized carbon nanotubes 132, as determined by titration, ranges from 0.02 to 0.18 millimoles/g of the functionalized carbon nanotubes. In other implementations, an amount of carboxylic acid groups coupled to functionalized carbon nanotubes 132, as determined by titration, is between any two of substantially: 0.005, 0.01, 0.02, 0.04, 0.06, 0.08, 0.10, 0.12, 0.14, 0.16, 0.18, 0.20 millimoles/g of the functionalized carbon nanotubes. Additionally or alternatively, an amount of hydroxyl groups coupled to functionalized carbon nanotubes 132, as determined by titration, ranges from 0.04 to 0.34 millimoles/g of the functionalized carbon nanotubes. In other implementations, an amount of hydroxyl groups coupled to functionalized carbon nanotubes 132, as determined by titration, is between any two of substantially: 0.005, 0.01, 0.02, 0.03, 0.04, 0.06, 0.08, 0.12, 0.16, 0.20, 0.24, 0.28, 0.32, 0.34, 0.35, 0.36, 0.37, 0.38, 0.39, 0.40 millimoles/g of the functionalized carbon nanotubes. As an illustrative, non-limiting example, Boehm titration is used to determine oxidation of functionalized carbon nanotubes 132 and/or presence of particular oxygen based functional groups 242.

In some implementations, overall oxidation on an exterior surface 226 of a sidewall 224 of functionalized carbon nanotubes 132 is between 5 and 25 weight percent (wt%) oxygen based functional groups 242. For multi-walled carbon nanotubes, exterior surfaces 226 of other sidewalls 224 (e.g., interior sidewalls 224) may have a similar overall oxidation wt% or a different (e.g., lesser) overall oxidation wt% than an outermost sidewall 224. In a particular implementation, overall oxidation on an exterior surface 226 of a sidewall 224 of functionalized carbon nanotubes 132 is between 15 and 22 wt% oxygen based functional groups 242. In other implementations, overall oxidation on an exterior surface 226 of a sidewall 224 of functionalized carbon nanotubes 132 is substantially between any two of: 2, 3, 4, 5, 6, 7, 8, 9, 10, 12, 14, 15, 16, 18, 20, 22, 24, 25, 26, 27, 28, 29, 30 wt% oxygen based functional groups 242. The overall oxidation weight percent may indicate an average or mean wt% of oxygen based functional groups 242 of all functionalized carbon nanotubes 132 or a range of overall oxidation wt%s of oxygen based functional groups 242 that each functionalized carbon nanotubes 132 satisfies.

In some implementations, functionalized carbon nanotubes 132 may be modified to improve dispersion in the polymer composite 142 and/or adhesion to polymer 134. That is the base carbon nanotubes 122 are further modified or the functionalized carbon nanotubes 132 (e.g., the unreacted carbon atoms, attached functional groups, or both thereof) are chemically modified. For example, tuning agent 126 of FIG. 1 is applied to functionalized carbon nanotubes 132. As an illustrative, non-limiting example, functionalized carbon nanotubes 132 are reacted with an amine (e.g., an aliphatic long-chain amine) to modify or tune the attached functional groups 242 for increased interaction with polymer 134, and particularly olefins. Increasing the interaction between (e.g., bonding) the tuned functional groups 242 and the polymer 134 improves the dispersion of functionalized carbon nanotubes 132 in the polymer composite 142.

Polymer 134 may include Lexan-HFD, low molecular weight polycarbonate (PC), polylactide (PLA), acrylonitrile butadiene styrene (ABS), polyesters (e.g., polybutylene terephthalate (PBT), polyethylene terephthalate (PET), or polyethylene naphthalate (PEN)), phenyl-N-tert-butylnitrone (PBN), polyamides, polyolefins, polycarbonate copolymers (e.g., polycarbonate-polysiloxane copolymers), polyphenylene ether (PPE), polyetherimide (PEI), polystyrene (PS), polymethylmethacrylate (PMMA), thermoset polymers, and a combination thereof and a combination thereof

Additionally or alternatively, polymer 134 may include thermoplastic polymers, copolymers, and blends thereof. The polymer 134 may include a polyester, such as a semicrystalline polymer, polyethylene terephthalate (PET), polyethylene terephthalate glycol-modified (PETG), glycol-modified poly-cyclohexylenedimethylene terephthalate (PCTG), polycyclohexylenedimethylene terephthalate (PCT), isophthalic acid-modified polycyclohexylenedimethylene terephthalate (PCTA), and Tritan™ (a combination of dimethyl terephthalate, 1,4-cyclohexanedimethanol, and 2,2,4,4-tetramethyl-1,3-cyclobutanediol from Eastman Chemical). Additionally, or alternatively, the material may include a resin, such as Xylex™ (a combination of PC and an amorphous polyester), polybutylene terephthalate (PBT) (e.g., a resin from the Valox™ line of PBT), and/or a PET resin available from SABIC™. Additionally, or alternatively, the material may include liquid-crystal polymer (LCP), polyether ether ketone (PEEK), fluorinated ethylene propylene (FEP), polysulfone (PSU), polyethylenimine, polyimide (PI), cyclic olefin copolymer (COC), cyclo olefin polymer (COP), polyamide (PA), acrylonitrile butadiene styrene (ABS), or a combination thereof.

The term "polycarbonate" (or "polycarbonates"), as used herein, includes copolycarbonates, homopolycarbonates and (co)polyester carbonates. The term polycarbonate can further include compositions having repeating structural units of the formula (1): 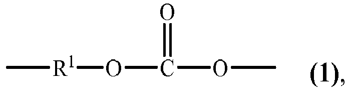 in which at least 60 percent of the total number of R1 groups are aromatic organic radicals and the balance thereof are aliphatic, alicyclic, or aromatic radicals.

The polymer composite 142 may further include one or more additives (e.g., additive(s) 136) intended to impart certain characteristics to polymer material 152. The various additives may be incorporated into polymer composite 142, with the proviso that the additive(s) are selected so as to not significantly adversely affect the desired properties of polymer composite 142 (e.g., the additives have good compatibility with the polymer 134 and functionalized carbon nanotubes 132). For example, the additive(s) selected do not significantly adversely affect bonding between polymer 134 and functionalized carbon nanotubes 132, fracture toughness, loading, or electrical conductivity.

As illustrative, non-limiting examples, polymer composite 142 may include one or more additives (e.g., 136), such as an impact modifier, flow modifier, antioxidant, thermal (e.g., heat stabilizer), light stabilizer, ultraviolet (UV) light stabilizer, UV absorbing additive, plasticizer, lubricant, antistatic agent, antimicrobial agent, colorant (e.g., a dye or pigment), surface effect additive, radiation stabilizer, or a combination thereof. The additives may include impact modifiers such as styrene-butadiene thermoplastic elastomers, fire-retardant additives, colorants, thermal stabilizers, antioxidants, antistatic agents and flow promoters. Such additives can be mixed at a suitable time during the mixing of the components for forming the polymer composite 142.

As an illustrative, non-limiting example, addition of one or more compatibilizers capable of reacting with oxygen based functional groups 242 will improve adhesion to polymer 134. In a particular implementation, compatibilizers capable of reacting with carboxylic acid functional groups 242 of functionalized carbon nanotubes 132 will improve adhesion to the polymer 134. In a particular implementation, glycidyl methacrylate (GMA)-based compatibilizers, such as Lotader AX8900, polyolefins, or PBT compositions are added to react with oxygen based functional groups 242 of functionalized carbon nanotubes 132.

As another illustrative, non-limiting example, polymer composite 142 may include a mold release agent to facilitate ejection of a molded part from the mold assembly. Examples of mold release agents include both aliphatic and aromatic carboxylic acids and their alkyl esters, such as stearic acid, behenic acid, pentaerythritol tetrastearate, glycerin tristearate, and ethylene glycol distearate, as illustrative, non-limiting examples. Mold release agents can also include polyolefins, such as high-density polyethylene, linear low-density polyethylene, low-density polyethylene, and similar polyolefin homopolymers and copolymers. Additionally, some compositions of mold release agents may use pentaerythritol tetrastearate, glycerol monostearate, a wax, or a poly alpha olefin. Mold release agents are typically present in the composition at 0.05 to 10 wt%, based on total weight of the composition, such as 0.1 to 5 wt %, 0.1 to 1 wt%, or 0.1 to 0.5 wt%. Some mold release agents have high molecular weight, typically greater than or equal to 300, to prohibit loss of the release agent from the molten polymer mixture during melt processing.

In some implementations, polymer composite 142 includes a concentration of functionalized carbon nanotubes 132 from substantially 0.1 to substantially 2.0 wt%. Additionally or alternatively, polymer composite 142 includes a concentration of crystalline cellulose 131 from substantially 0.1 to substantially 2.0 wt% In other implementations, a concentration of either of or both of functionalized carbon nanotubes 132 and crystalline cellulose 131 is greater than or equal to any one of or between any two of substantially: 0.1, 0.2, 0.3, 0.5, 0.6, 0.8, 1.0, 1.2, 1.4, 1.5, 1.6, 1.8, 1.9, 2.0, 3.0, 4.0, or 5.0.

Thus, polymer composite 142 has increased bonding and adhesion between polymer 134 and functionalized carbon nanotubes 132 thereof by incorporating the functionalized carbon nanotubes 132 described herein into polymer composite 142. The increased bonding and adhesion increases resistance to fracture of parts made using polymer composite 142. For example, parts made from polymer composite 142 may have lower LPC values than parts made from conventional polymer compositions.

Referring to FIG. 3, an example of a system 300 for producing a polymer material is shown. System 300 is configured to use an extrusion process to form a polymer composition (e.g., polymer composite 142) and an injection molding process to form the polymer material 152 from the polymer composite 142, as described herein. System 300 includes an extruder 310, liquid feeder 312, injector 314, and die 318 (e.g., a mold). Extruder 310 is coupled to injector 314 via one or more conduits 322, such as one or more tubes. Injector 314 is coupled to die 318 via one or more conduits 326, such as one or more tubes.

Extruder 310 includes one more hoppers, such as a first hopper 330 and a second hopper 332, and a barrel 334 coupled to the one or more hoppers. For example, barrel 334 may be coupled to a hopper a via a feed throat 338. Each hopper 330, 332 is configured to receive material (e.g., pellets, granules, flakes, powders, and/or liquids) that is provided (e.g., gravity fed or force fed) from the hopper to barrel 334 via a corresponding feed throat 338. As shown, first hopper 330 has received a first material 340 and second hopper 332 has received a second material 342. First material 340 includes a polymer, such as polymer 134, and second material 342 includes functionalized carbon nanotubes 132 or additive 136. Although described as being provided to separate hoppers, in other implementations, first and second materials 340, 342 may be provided by the same hopper.

In some implementations, another material can be combined with first and second materials 340, 342 in the extruder 310. For example, the other material may be received by the extruder 310 via the one or more hoppers. The other material can include one or more additive(s) as described above, such as additive 136. Each hopper 330, 332 provides its corresponding material 340, 342 into barrel 334 where the materials are combined to form a polymer composite 350. For example, the materials are gradually melted in barrel 334 by the mechanical energy (e.g., pressure) generated by turning screws, by heaters arranged along barrel 334, or both. The molten materials are mixed together (e.g., blended) to form polymer composite 350. Polymer composite 350 may include or correspond to polymer composite 142.

Liquid feeder 312 stores fluid (e.g., a liquid dispersion) and provides the fluid to barrel 334. In some implementations, after first and second materials 340, 342 are combined in barrel 334, fluid chamber 314 provides CC-CNT dispersion 344 to barrel 334 via conduit 328. CC-CNT dispersion 344 may include or correspond to dispersion 133. CC-CNT dispersion includes functionalized carbon nanotubes 132 and crystalline cellulose 131, and thus may include crystalline cellulose, microcrystalline cellulose, nano-crystalline cellulose, or a combination thereof. CC-CNT dispersion 344 is blended with at least one of first and second materials 340, 342 to form polymer composite 350. In other implementations, CC-CNT dispersion 344 is provided to first material 340 prior to introduction of second material 342. In such implementations, first material 340 and CC-CNT dispersion 344 are blended to form polymer composite 350.

Polymer composite 350 is provided from barrel 334 via conduit 322 to injector 314. Injector 314 injects polymer composite 350 into die 318 via conduit 326. Polymer composite 350 flows into the die 318 until the polymer composite 350 substantially fills the die 318, such as one or more cavities or features thereof. The polymer composite 350 cools to form polymer material 152. As shown, polymer composite 350 is provided from extruder 310 to die 318 via injector 314. In other implementations, system 300 may not include an injector and extruder 310 may provide polymer composite 350 to die 318 via one or more conduits. Although polymer composite 350 has been described in system 300 using an extrusion process, in other implementations, polymer composite 350 may be formed by another process and provided to injector 314 for injection into die 318.

As described with reference to FIG. 3, system 300 is configured to form polymer material. The polymer material includes a polymer composite (including the polymer, the functionalized carbon nanotubes, and the crystalline cellulose) that may advantageously have increased mechanical properties. For example, the polymer material has increased fracture toughness as compared to polymer material made from polymer compositions having conventional carbon nanotubes. Additionally, the polymer material may have a designed conductivity and may be electrically conductive, anti-static, or EMI shielding.

In other implementations, the extruder 310 forms extrudate (e.g., strands of polymer composite 142) which is then cooled in a water bath, or by spraying the extrudate in a conduit 322 (e.g., a conveyor belt) as the extrudate moves from extruder 310 to a granulator via conduit 322. The granulator breaks the extrudate (e.g., the strands thereof) into pieces, such as pellets. The pellets of polymer composite 142 can be used in polymer material forming process.

Referring to FIG. 4, a diagram 400 illustrating examples of multiple dispersion states of an MCC-CNT dispersion (e.g., 133, 344) is shown. In FIG. 4, a first dispersion state 133A (i.e., agglomeration free dispersion) is shown having no MCC agglomerates and having no CNT agglomerates. A second dispersion state 133B (i.e., MCC agglomeration) is shown having MCC agglomerates and having no CNT agglomerates. A third dispersion state 133C (i.e., CNT agglomeration) is shown having CNT agglomerates and having no MCC agglomerates. The state of dispersion of the MCC-CNT dispersion can be tuned either altering one or more of: a type of the functionalized carbon nanotubes, a type of the polymer, a concentration of the crystalline cellulose, a size of the crystalline cellulose, a concentration of the functionalized carbon nanotubes, an addition mode, or a mixing mode. Dispersions including crystalline cellulose, nano-crystalline cellulose, or both, can also have one of the three dispersion states illustrated in FIG. 4.

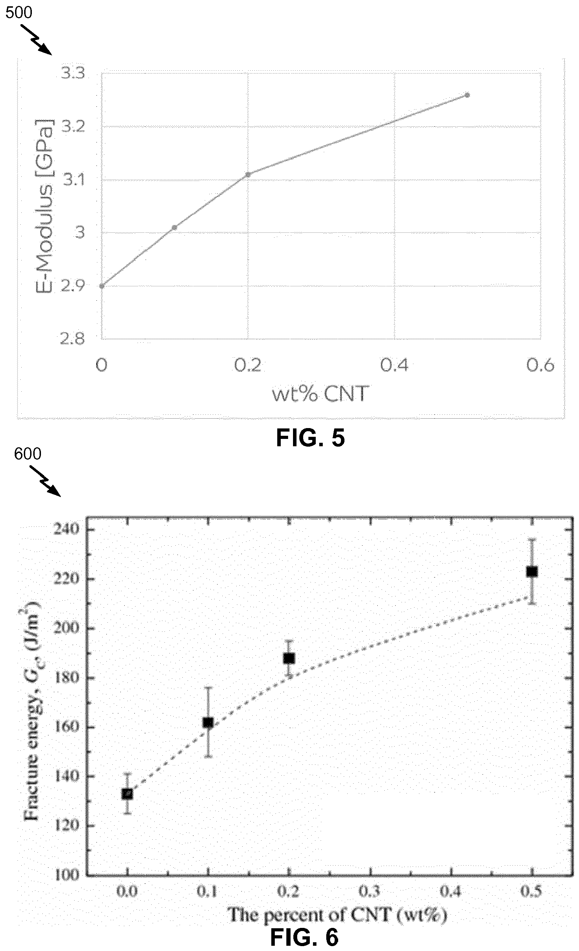

FIGS. 5 and 6 illustrate mechanical properties of examples of polymer composite materials described herein, such as polymer composite 142. The mechanical properties illustrated in FIG. 5 were measured using ASTM D63814 and ASTM D256, and the fracture toughness illustrated in FIG. 6 was measured using ASTM 5045.

Referring to FIG 5, FIG. 5 illustrates a diagram 500 depicting a Young's modulus (elastic modulus) of polymer composite materials as function of functionalized carbon nanotube concentration. The Young's modulus is illustrated in gigapascals (GPa) and the functionalized carbon nanotube concentration is illustrated in weight percentage (e.g., wt%). As illustrated in FIG. 5, as the percentage of functionalized carbon nanotubes increases, the Young's modulus of the polymer composite materials increases. To illustrate, the polymer material becomes more resistant to being deformed elastically.

Referring to FIG 6, FIG. 6 illustrates a diagram 600 of a graph depicting fracture energy of polymer composite materials as function of functionalized carbon nanotube concentration. The fracture energy is illustrated in joules per meters squared (J/m/m) and the functionalized carbon nanotube concentration is illustrated in weight percentage (e.g., wt%). As illustrated in FIG. 6, as the percentage of functionalized carbon nanotubes increases, the energy required to fracture the polymer composite materials increases, i.e., the fracture toughness of the polymer composite materials increases.

FIGS. 5 and 6 illustrate that a mixture of crystalline cellulose (e.g., microcrystalline cellulose) and functionalized carbon nanotubes act as a reinforcing filler even at low concentrations. The mixture of crystalline cellulose and functionalized carbon nanotubes increases the Young's modulus (elasticity) and fracture toughness of the polymer composite materials. These results indicate that debonding and pull-out contribute significantly to the increase in fracture toughness.

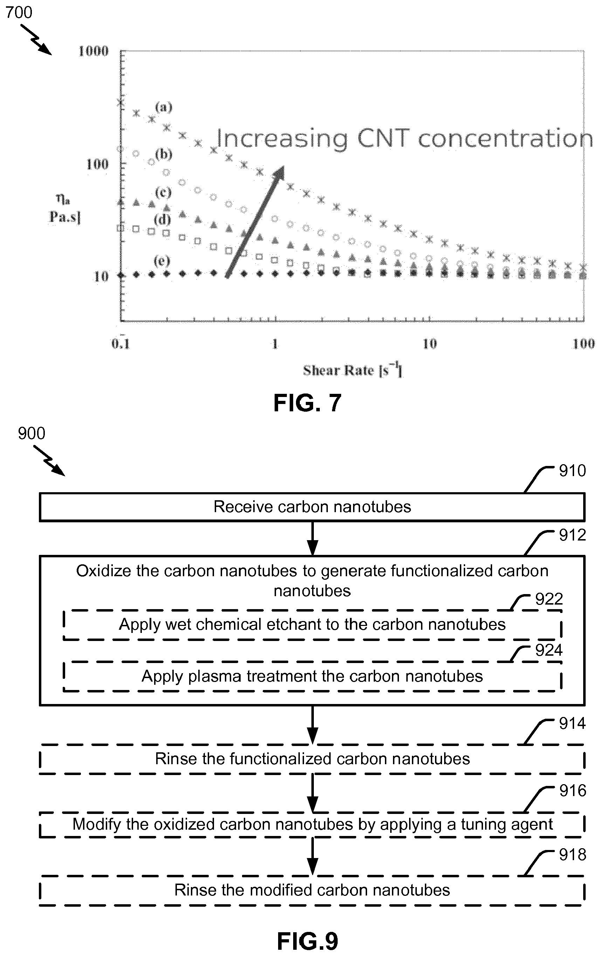

FIGS. 7 and 8 illustrate rheological properties (e.g., a rheological response) of the polymer composite materials described herein. The rheological properties were measured using a ARES-G2 rheometer both in small angle oscillatory shear (SAOS) mode and extensional mode. Parallel plates of 25 mm were used for the SAOS mode and a SER tool was used for the extensional mode.

Referring to FIG 7, FIG. 7 illustrates a diagram 700 of a graph depicting shear rate viscosity of a polymer matrix including the functionalized carbon nanotubes and microcrystalline cellulose. Shear rate viscosity affects a polymer's melt strength (resistance of a polymer melt to stretching), i.e., a higher shear viscosity increases melt strength. The vertical axis illustrates absolute viscosity (ηa) in Pascal seconds (Pa*s) and the horizontal axis illustrates shear rate in 1/seconds. FIG. 7 illustrates plots of 5 polymer composite materials (a-e) of decreasing concentrations (by weight percent) from (a) to (e). To illustrate, polymer (a) has the highest concentration (weight percent) of functionalized carbon nanotubes and polymer (e) has the lowest concentration of functionalized carbon nanotubes. Polymer (a) has the highest melt strength, and each of the other polymers (b)-(e) have lower melt strengths corresponding to lower concentrations of functionalized carbon nanotubes and microcrystalline cellulose.

Referring to FIG 8, FIG. 8 illustrates a diagram 800 of a graph depicting extensional viscosity of a polymer matrix including the functionalized carbon nanotubes and microcrystalline cellulose. Extensional viscosity also affects a polymer's melt strength, i.e., increasing extensional viscosity increases melt strength. The vertical axis illustrates viscosity (η+) in Pascal seconds (Pa*s) and the horizontal axis illustrates time in seconds. FIG. 8 illustrates plots of 3 polymer composite materials (0, 2.5%, and 5%) with different concentrations (by weight percent) of functionalized carbon nanotubes. To illustrate, a first polymer plot (indicated by triangles in FIG. 8) corresponds to a polymer composite with a "high" concentration (weight percent) of functionalized carbon nanotubes and microcrystalline cellulose, a second polymer plot (indicated by circles in FIG. 8) corresponds to a polymer composite with a "low" concentration of functionalized carbon nanotubes and microcrystalline cellulose, and third polymer plot (indicated by squares in FIG. 8) corresponds to a polymer composite with no concentration of functionalized carbon nanotubes and microcrystalline cellulose. Polymer (a) has the highest melt strength, and each of the other polymers (b)-(e) have lower melt strengths corresponding to lower concentrations of carbon nanotubes and microcrystalline cellulose.

FIGS. 7 and 8 illustrate that melt strength (low shear rate viscosity and the extensional viscosity) improves with the addition of functionalized carbon nanotubes, i.e., increases with increasing concentrations of functionalized carbon nanotubes. The increased concentrations of functionalized carbon nanotubes are enabled in part by the addition of crystalline cellulose. Improved melt strength (low shear rate viscosity and the extensional viscosity) can help in polymer forming processes such as foaming, molding and other processing techniques. FIGS. 7 and 8 further illustrate that the high shear rate viscosity may not be affected by addition of functionalized carbon nanotubes, and thus forming processes should not be affected with increased concentrations of functionalized carbon nanotubes.

Referring to FIG. 9, an example of a method of manufacturing functionalized carbon nanotubes is shown. Method 900 may be performed by a manufacturing device or system, such as system 100 (e.g., CNT modification system 112 and/or electronic device 118). The functionalized carbon nanotubes may include or correspond to functionalized carbon nanotubes 132, as described herein.

Method 900 includes receiving carbon nanotubes, at 910. The carbon nanotubes may include or correspond to carbon nanotubes 122 and may be double-walled carbon nanotubes or multi-walled carbon nanotubes, or a combination thereof. In some implementations, method 900 optionally includes growing or forming the carbon nanotubes For example, carbon nanotubes 122 are grown by a CVD process. Method 900 also includes oxidizing the carbon nanotubes to generate functionalized carbon nanotubes, at 912. For example, oxidizing agent 124 is applied to carbon nanotubes 122 in liquid or plasma form and carbon nanotubes 122 are oxidized by oxidizing agent 124 to form oxygen based functional groups 242 thereon to generate functionalized carbon nanotubes 132.

In some implementations, oxidizing the carbon nanotubes includes at applying a wet chemical etchant to the carbon nanotubes, 922. For example, oxidizing agent 124, such as nitric acid or nitric acid and sulfuric acid, is applied a liquid etchant to carbon nanotubes 122. In other implementations, oxidizing the carbon nanotubes includes applying plasma treatment the carbon nanotubes, at 924. For example, nitric acid plasma is applied to carbon nanotubes 122.

In some implementations, method 900 may also include rinsing the functionalized carbon nanotubes, at 914. For example, the functionalized carbon nanotubes 132 are rinsed in an ultrasonic bath with ultrapure water. Rinsing the functionalized carbon nanotubes 132 may remove containments. Additionally, or alternatively, method 900 further may further include modifying the functionalized carbon nanotubes by applying a tuning agent, at 916. For example, the functionalized carbon nanotubes 132 are chemically reacted with tuning agent 126, such as an amine, to modify functional groups 242 of the functionalized carbon nanotubes 132 for increased adhesion to polymer 134. In some implementations, method 900 may include rinsing the modified carbon nanotubes, at 918. For example, the functionalized carbon nanotubes 132 are rinsed in a second ultrasonic bath with ultrapure water after treatment with tuning agent 126. Rinsing the functionalized carbon nanotubes 132 may remove containments.

Thus, method 900 describes manufacturing of functionalized carbon nanotubes 132. Method 900 advantageously enables improved bonding of the functionalized carbon nanotubes 132 to polymers (e.g., polymer 134) to form improved polymer compositions (polymer composite 142) and electrically conductive polymer parts (including the functionalized carbon nanotubes 132) with increased mechanical properties, such as fracture toughness and loading.

Referring to FIG. 10, an example of a method of manufacturing a polymer composition is shown. Method 1000 may be performed by a manufacturing device or system, such as system 100 (e.g., combiner 114 and/or electronic device 118), system 300 (e.g., extruder 310), and/or an ultrasonifier (e.g., ultrasonic bath). The polymer composition may include or correspond to polymer composite 142 or polymer composite 350.

Method 1000 includes receiving functionalized carbon nanotubes, at 1010. Method 1000 also includes combining the functionalized carbon nanotubes, crystalline cellulose, and one or more polymers to form a polymer composition, at 1012. One product or article of manufacture that can be formed from method 1000 includes polymer material 152. To illustrate, a dispersion 133 of crystalline cellulose 131 and functionalized carbon nanotubes 132 is created by mixing crystalline cellulose 131 and functionalized carbon nanotubes 132, and dispersion 133 is then blended (e.g., injected into) an extruder with molten polymer 134 to form polymer composite 142.

Thus, method 1000 describes manufacturing of a polymer composition, such as polymer composite 142. Method 1000 advantageously enables creating a polymer composition with increased polymer to nanotube bonding such that polymer materials (e.g., 152) with increased mechanical properties, such as fracture toughness and loading, can be formed.

Referring to FIG. 11, an example of a method of manufacturing polymer materials is shown. Method 1100 may be performed by a manufacturing device or system, such as system 100 (e.g., forming system 116 and/or electronic device 118) and/or system 300. The polymer material may include or correspond to polymer material 152, as described herein.

Method 1100 receiving a polymer composition including functionalized carbon nanotubes and crystalline cellulose, at 1110. For example, the polymer composition may include or correspond to polymer composite 142 or polymer composite 350. The functionalized carbon nanotubes may include or correspond to functionalized carbon nanotubes 132, and the crystalline cellulose may include or correspond to crystalline cellulose 131 or microcrystalline cellulose 231. Method 1100 also includes forming a polymer material based on the polymer composition, at 1112. For example, polymer composite 142 is in a molten state, and molten polymer composite 142 is injected into mold 144 or die 318. The molten polymer composite 142 cools to form polymer material 152.

Method 1100 may further include combining, at an extrusion device, the polymer, a dispersion of functionalized carbon nanotubes and crystalline cellulose, and optionally an additive to form the polymer composition. For example, the extrusion device may include or correspond to extruder 310. In some such implementations, method 1100 also includes providing, from the extrusion device to an injection device, the polymer composition for injection into the mold. For example, the injection device may include or correspond to injector 314. In other implementations, the extrusion device injects the composition into the mold.

Thus, method 1100 describes manufacturing a polymer material (e.g., 152) having increased mechanical properties. Method 1100 advantageously enables forming polymer materials with increased mechanical properties. It is noted that one or more operations described with reference to one of the methods of FIGS. 9-11 may be combined with one or more operations of another of FIGS. 9-11. For example, one or more operations of method 900 may be combined with one or more operations of method 1100. Additionally, one or more of the operations described with reference to the systems of FIGS. 1 and 3 may be combined with one or more operations described with reference to one of the methods of FIGS. 9-11.

The above specification and examples provide a complete description of the structure and use of illustrative implementations. Although certain implementations have been described above with a certain degree of particularity, or with reference to one or more individual implementations, those skilled in the art could make numerous alterations to the disclosed implementations without departing from the scope of this disclosure. As such, the various illustrative implementations of the methods and systems are not intended to be limited to the particular forms disclosed. Rather, they include all modifications and alternatives falling within the scope of the claims, and implementations other than the one shown may include some or all of the features of the depicted implementations. For example, elements may be omitted or combined as a unitary structure, connections may be substituted, or both. Further, where appropriate, aspects of any of the examples described above may be combined with aspects of any of the other examples described to form further examples having comparable or different properties and/or functions, and addressing the same or different problems. Similarly, it will be understood that the benefits and advantages described above may relate to one implementation or may relate to several implementations. Accordingly, no single implementation described herein should be construed as limiting and implementations of the disclosure may be suitably combined without departing from the teachings of the disclosure.

The claims are not intended to include, and should not be interpreted to include, means-plus- or step-plus-function limitations, unless such a limitation is explicitly recited in a given claim using the phrase(s) "means for" or "step for," respectively.

## Claims

1. A polymeric composite material comprising:
one or more polymers;
crystalline cellulose; and
functionalized carbon nanotubes.

2. The polymeric composite material of claim 1, further comprising a surfactant.

3. The polymeric composite material of claim 2, wherein the surfactant includes C8-C20 type surfactants.

4. The polymeric composite material of claim 1, wherein the crystalline cellulose corresponds to a dispersion agent of the functionalized carbon nanotubes, wherein the crystalline cellulose includes crystalline cellulose, microcrystalline cellulose, nano-crystalline cellulose, or a combination thereof, and wherein the crystalline cellulose and the functionalized carbon nanotubes correspond to filler material of the one or more polymers.

5. The polymeric composite material of claim 1, wherein the crystalline cellulose is covalently bonded or coordinated to functional groups of the functionalized carbon nanotubes and/or is bonded to or coordinated with polymer molecules of the one or more polymers.

6. The polymeric composite material of claim 1, further comprising carbon black, carbon fibers, graphene, non-functionalized multi-wall carbon nanotubes, single-walled functionalized or non-functionalized carbon nanotubes, or a combination thereof.

7. The polymeric composite material of claim 1, wherein the functionalized carbon nanotubes have one or more characteristics selected from the group of: a length of between 0.4 and 15 microns, 2 to 15 walls, an oxidation level between 3 and 25 wt% as determined by thermogravimetric analysis (TGA), or any combination thereof.

8. The polymeric composite material of claim 1, wherein the polymer is selected from the group consisting of Lexan-HFD, low molecular weight polycarbonate (PC), polylactide, acrylonitrile butadiene styrene, polybutylene terephthalate, polyethylene terephthalate, polyethylene naphthalate, phenyl-N-tert-butylnitrone, polyamides, polyolefins, PC copolymers, polyphenylene ether, polyetherimide, polystyrene, polymethylmethacrylate, thermoset polymers, and any combination thereof.

9. A method of forming a polymeric composite material, the method comprising:
receiving a polymer composition including one or more polymers, functionalized carbon nanotubes, and crystalline cellulose; and
forming the polymeric composite material based on the polymer composition,
wherein the crystalline cellulose is absorbed on a surface of the functionalized carbon
nanotubes.

10. The method of claim 9, further comprising
adding the functionalized carbon nanotubes to the crystalline cellulose to create a CC-CNT dispersion; and
blending the CC-CNT dispersion with the polymer to form the polymer composition.

11. The method of claim 9, further comprising adding a surfactant to the crystalline cellulose, wherein the surfactant inhibits agglomeration of the functionalized carbon nanotubes and the crystalline cellulose.

12. The method of claim 11, wherein the functionalized carbon nanotubes and the surfactant are combined to form a mixture, and further comprising adding the mixture to the crystalline cellulose by an ultrasonification process.

13. The method of claim 9, further comprising:
receiving, at an extrusion device form a liquid feeder, a CC-CNT dispersion;
combining, at the extrusion device, the polymer and the CC-CNT dispersion; and
outputting, from the extrusion device to a die, the polymer composition including the functionalized carbon nanotubes and the crystalline cellulose.

14. The method of claim 9, wherein the functionalized carbon nanotubes have an oxidation level between 3 and 25 wt% as determined by thermogravimetric analysis (TGA), wherein performing the TGA includes heating dried functionalized carbon nanotubes at a rate of 5 degrees C per minute from room temperature to 1000 degrees C in a dry nitrogen atmosphere, and wherein the oxidation level of the functionalized carbon nanotubes is based on a percentage weight loss from 200 to 600 degrees C.

15. A polymer material formed by the method of any of claims 9-14.
